# EUROPÄISCHE PATENTSCHRIFT

(11) **EP 0 628 159 B1**
(45) Veröffentlichungstag und Bekanntmachung des Hinweises auf die Patenterteilung: **11.06.1997**
(21) Anmeldenummer: 93903834.5
(22) Anmeldetag: 01.03.1993
(51) Int. Cl.: G01J 9/02, G01J 3/453, G01B 9/02, G01B 11/24

(54) **BEOBACHTUNG VON PRÜFLINGSOBERFLÄCHEN NACH DEM SPECKLE-SHEARING-VERFAHREN**
OBSERVING TEST-PIECE SURFACES BY THE SPECKLE-SHEARING PROCESS
OBSERVATION DE SURFACES D'ECHANTILLONS SELON LE PROCEDE DE L'INTERFEROMETRIE A TAVELURES A CISAILLEMENT

(30) Priorität: 28.02.1992 DE 4206151
(43) Veröffentlichungstag der Anmeldung: 14.12.1994
(73) Patentinhaber: PFISTER, Klaus, 83052 Bruckmühl (DE)
(72) Erfinder: PFISTER, Klaus, 83052 Bruckmühl (DE)
(74) Vertreter: König, Beate, Dipl.-Phys. Dr.
(86) Internationale Anmeldenummer: DE9300172
(87) Internationale Veröffentlichungsnummer: WO9317311

(56) Entgegenhaltungen:
- EP-A- 0 126 475
- DE-C- 3 817 561
- US-A- 4 660 978
- US-A- 4 725 144
- US-A- 5 076 695
- APPLIED OPTICS Bd. 13, Nr. 2, Februar 1974, NEW YORK US Seiten 233 - 234; HIRSCHBERG 'FIELD WIDENED MICHELSON SPECTROMETER WITH NO MOVING PARTS'

## Beschreibung

Die Erfindung betrifft eine Vorrichtung zur Beobachtung von Prüflingsoberflächen für die verformungsmessung nach dem Speckle-Shearing-Verfahren in kompakter Bauart, umfassend eine kohärente Beleuchtung der Prüflingsoberfläche einen Bildsensor (Kamera) und ein zur Abbildung der Prüflingsoberfläche auf den Bildsensor verwendetes, zwei Spiegel und einen Strahlteiler aufweisendes Zweistrahl-Interferometer.

Beim Speckle-Shearing-Verfahren. das u.a. im "Handbuch für Experimentelle Spannungsanalyse, Hrsg. Christian Rohrbach. VDI-Verlag 1989, S. 386-389" beschrieben ist. wird die mit kohärentem Licht beleuchtete, zu untersuchende Prüflingsoberfläche mittels Kameraaufnahmen beobachtet. die aus zwei optisch überlagerten Teilbildern bestehen. welche geringfügig gegeneinander versetzt sind. Dieser Versatz wird mit einer Doppelapertur oder einem Prisma im abbildenden optischen System erzeugt. Beide Ausführungen sind nicht zur Nutzung der für interferometrische Messungen eingeführten Phasenshifttechnik in Verbindung mit der elektronischen Bildauswertung geeignet. Außerdem ist keine Verstellmöglichkeit des Shearwinkels vorgesehen.

Die DE-C-36 11 402 beschreibt ein Verfahren und eine Vorrichtung zum exakten Einstellen des Shearversatzes in einem Shearing-Interferometer-System. Der Rumpf des zugrunde liegenden Interferometers besteht aus einem Strahlteilerwürfel mit Endspiegel der beiden Interferometerarme, die als Umlenkprismen ausgebildet sind. Ebene Wellenfronten im Interferometerbereich werden durch Kollimieren des Strahlengangs erreicht. Der Shearversatz wird durch Relativverschiebung der Umlenkprismen eingestellt. Dem Interferometer-Rumpf ist ein abbildendes Linsensystem vor- und nachgeschaltet und zwar zum Erfassen der Objektoberfläche und zum Abbilden auf einen Bildsensor.

Ein aus der US-A-4 660 978 bekannte Vorrichtung dient zur Echtzeitanalyse der Verzerrung von Wellenfronten eines optischen Strahls im Labor, die von den zu untersuchenden optischen Systemen hervorgerufen oder beeinflußt werden. Die Anordnung braucht keinen Referenzstrahl; sie ist als Shearing-Interferometer ausgebildet. Die Interferometerarme sind mit Planspiegeln abgeschlossen und es wird ein paralleler Strahlengang untersucht. Eine Abbildung von Prüflingsoberflächen auf den Bildsensor ist ohne zusätzliche Hilfsmittel nicht möglich.

In APPLIED OPTICS, Bd. 13, Nr. 2, 1974, S. 233 - 234 wird ein Michelson-Interferometer vorgeschlagen, bei dem zur Verbesserung der Auflösung und Erhöhung der eingesetzten Energie eine Feldaufweitung unter Verwendung von Hohlspiegeln vorgeschlagen wird. Es werden zwei sphärische Hohlspiegel mit gleichem Krümmungsradius so justiert, daß die Mittelpunkte ihrer Krümmungsradien auf den Oberflächen des Teilerwürfels zu liegen kommen. Die Abbildungen der Quellen fallen ebenfalls auf diese Oberflächen und erzeugen dort aus Symmetriegründen im Interferometeraufbau Interferenzordnungen.

Die US-A-4 193 694 beschreibt den Verstellmechanismus/Ansteuerung eines Interferenz-Spektrometers, bei dem die beiden Interferometerarme mit Hohlspiegeln abgeschlossen sind und bei dem der eine Hohlspiegel in Strahlengangrichtung zur Veränderung des optischen Laufwegs verstellbar angeordnet ist. Die verwendeten Hohlspiegel ("cat eyes") haben dabei den Zweck, den parallelen Strahlengang im jeweiligen Interferometerarm auf einen im Brennpunkt angeordneten kleinflächigen Detektor zu fokusieren.

In APPLIED OPTICS, Vol. 14, No. 3, 1975, S. 618-622 wird die Speckle-Shearing-Interferometrie zur flächenhaften Dehnungsmessung beschrieben, wobei das Prinzip des Doppelapertur-Speckle-Interferometers zugrunde gelegt ist. Es wird mit einer 4-fach Apertur gearbeitet, bei der sich gleichsam überlagerte, simultane Aufnahmen für 4 Shear-Richtungen ergeben. Diese Überlagerung wird beim Auswerten der Aufnahmen mit einer Fourier-Filtertechnik nach den einzelnen Shearrichtungen aufgelöst.

Die US-A-4 725 144 beschreibt ein System zur vergleichenden Messung (Formtreueprüfung) der Oberflächenform optischer Elemente (z.B. Hohlspiegel). Es wird ein Twyman-Green Interferometer mit kohärenter Beleuchtung verwendet. Testobjekt und Vergleichsobjekt sind die Endspiegel der beiden Interferometerarme. Um die Anzahl der beobachteten Interferenzordnungen zu verringern, z.B. beim Vergleich einer ashpärischen Optik mit einem sphärischen Hohlspiegel, sind im Referenz-Interferometerarm Verstellmechanismen am Referenzobjekt bzw. an einem Umlenkspiegel angebracht, welche diese Bauteile kontrolliert verformen.

Die Ausführung marktgängiger Meßapparaturen, die dem Stand der Technik am nächsten kommen, benutzt eine Twyman-Green-Interferometer-Anordnung und eine elektronische Kamera, wie es in Applied Optics, Vol.24, No.14, 1985, S.2177-2178 beschrieben ist. Das Interferometer besteht im wesentlichen aus einem Strahlteilerwürfel und zwei Planspiegeln. Das Shearen wird durch Verkippen eines dieser Planspiegel bewirkt. Phasenshiften ist vorgesehen. Es erfolgt durch Verschieben eines der beiden Planspiegel mit einem Piezotranslator. Nachteilig an dieser Vorrichtung ist die erforderlich große Abmessung des verwendeten Teilerwürfels, die von der Apertur des Kameraobjektivs und dessen Öffnungswinkel bestimmt wird. Beim Shiftvorgang für das serielle Einlesen von phasenversetzten Teilaufnahmen einer Szene wirkt sich die Masse des relativ großen Planspiegels ungünstig auf dessen Einschwingverhalten aus. Die gesamte Meßapparatur ist unhandlich, was bei Anwendungen im Rahmen der zerstörungsfreien Materialprüfung häufig stört. Das Wechseln von Objektiven mit unterschiedlichen Brennweiten/Baugrößen zur Anpassung an das Meßproblem ist mit vorgesetztem Strahlteiler nur bedingt möglich und umständlich vorzunehmen.

Ausgehend von diesem Stand der Technik liegt der Erfindung die Aufgabe zugrunde, eine kompakt aufbaubare und vergleichsweise leichte Vorrichtung der eingangs genannten Art zu schaffen, die es gestattet, auch an schwer zugänglichen Inspektionsorten Messungen durchführen zu können, das Einschwingverhalten des Spiegels zu verkürzen und Wechselobjektive unterschiedlicher Brennweite und Bauart verwenden zu können.

Diese Aufgabe wird erfindungsgemäß bei einer Vorrichtung mit den Merkmalen des Anspruchs 1 gelöst. Bei dieser speist der Strahlteiler das vom Objekt einfallende Licht in zwei Interferometerarme eines Zweistrahl-Interferometers vom Grundtyp des Michelson-Interferometers ein, die jeweils durch einen auch als Abbildungsoptik vorgesehenen Hohlspiegel vorzugsweise gleicher Brennweite abgeschlossen sind, wobei vorzugsweise einer der beiden Hohlspiegel transversal zum Interferometerarm und einer der beiden Hohlspiegel in Richtung des Interferometerarms verstellbar ist. Justiervorrichtungen dienen zum Längsverstellen und Querverstellen der Spiegel. Das Anordnen der beiden Hohlspiegel in unmittelbarer Nähe zu den Begrenzungsflächen des Strahlteilers bewirkt einen sehr kompakten Meßaufbau.

Eine erfindungsgemäße Michelson-Interferometer-Anordnung verfügt über Endspiegel, die als Hohlspiegel gleicher Brennweite ausgebildet sind. Mit einer Vorrichtung zum zweiachsigen Verschieben eines Hohlspiegels quer zum Interferometerarm lassen sich Versatz und Richtung für das Shearen einstellen; wahlweise kann das Shearen auch durch Verkippen eines der beiden Hohlspiegel erfolgen. Mit einer Vorrichtung zum Verschieben eines der beiden Hohlspiegel längs des Interferometerarms lassen sich beide Teilbilder auf einen gleichen Abbildungsmaßstab justieren. Das Verschieben eines Hohlspiegels in derselben Richtung mittels Piezotranslator um Bruchteile einer Lichtwellenlänge, ruft einen Gangunterschied gegenüber dem anderen Interferometerarm und damit eine Phasenänderung im Interferenz-Specklemuster auf dem Bildsensor hervor, nutzbar zur Anwendung des Phasenshiftverfahrens.

Weitere Ausgestaltungen der Erfindung sind in den abhängigen Patent ansprüchen gekennzeichnet.

Eine erfindungsgemäße Meßanordnung nutzt ausschließlich die beiden Hohlspiegel der interferometeranordnung zur Abbildung der Prüflingsoberfläche auf den Bildsensor der Kamera. Die Fokusierung der aus den beiden Teilbildern bestehenden Aufnahme erfolgt durch Verschiebung des Bildsensors (Kamera) zum Michelson-Interferometer längs der optischen Achse.

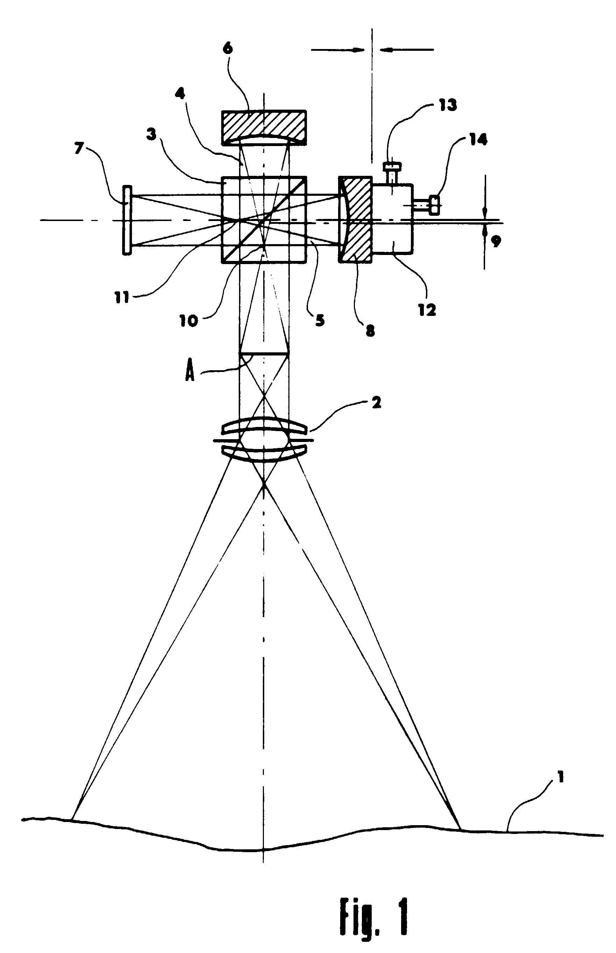

Ein Ausführungsbeispiel, bei dem das abbildende System um ein Objektiv erweitert ist, wird im Folgenden anhand der Figur 1 beschrieben. Die dort dargestellte Vorrichtung mit einem Michelson-Interferometer dient zur Beobachtung des von der durch Beleuchtung mit kohärentem Licht von der Prüflingsoberfläche 1 ausgehenden Specklemusters nach dem Shearing-Verfahren, wahlweise unter Einbeziehung der Phasen-Shifttechnik. Vorzugsweise ist die Hohlspiegel/Kamera-Anordnung auf eine 1:1 Abbildung der vom Objektiv 2 erzeugten Zwischenabbildung der Prüflingsoberfläche 1 auf den Bildsensor 7 ausgelegt. Die Brennpunkte 10 und 11 der Hohlspiegel 6 und 8 können dabei selbstverständlich innerhalb des Teilerwürfels 3 zu liegen kommen, was einen sehr kompakten Aufbau ermöglicht. Es ist zur Baugrößenminimierung zweckmäßig, die Brennweite der Hohlspiegel 6 und 8 so zu wählen, daß sowohl diese als auch Bildsensor 7 und Objektiv 2 unmittelbar hinter dem Strahlteiler 3 angeordnet werden können. Der Strahlteilerwürfel 3 weist nur eine sehr kleine Kantenlänge auf. Das Objektiv 2 ist vorteilhaft als Wechselobjektiv oder wahlweise auch als Varioobjektiv ausgestaltet. Das Objektiv 2 weist vorteilhaft eine verstellbare Blende auf, um die mittlere Specklegröße beeinflussen zu können. Werden nur Hohlspiegel als Abbildungsoptiken eingesetzt, dann ist eine separate Blende aus dem gleichen Grund zweckmäßig. Das vom Objektiv 2 austretende Licht fällt in den Teilerwürfel 3 ein. Der Strahlengang teilt sich in die beiden Interferometerarme 4 und 5 der Michelson-Interferometer-Anordnung.

Der Strahlengang im Interferometerarm 4 läuft gegen den starren Hohlspiegel 6 und wird von dort zurück über den Teilerwürfel 3 auf den Bildsensor 7 einer Kamera geleitet und bildet auf diesen die Prüflingsoberfläche 1 ab.

Der Strahlengang im Interferometerarm 5 läuft gegen den verstellbaren Hohlspiegel 8. Abweichend von einem exakt symmetrischen Aufbau beider Interferometerarme weist dieser einen Achsversatz 9 auf. Das führt zu einem Kippwinkel zwischen den Hauptachsen der beiden Interferometerarme 4 und 5. Dadurch verschiebt sich das Projektionszentrum für die Abbildung auf den Bildsensor 7. Die Abbildung mit Achsversatz des Interferometerarms 5 überlagert sich der des Interferometerarmes 4 und erzeugt mit diesem zusammen die Shearingaufnahme auf dem Bildsensor 7. Der Achsversatz 9 läßt sich durch Verschieben des Hohlspiegels 8 mittels Mikrometerschrauben in zwei Richtungen quer zum Interferometerarm justieren. Der Achsversatz 9 gibt Größe und Richtung des Shearens vor.

Eine weitere Verschiebemöglichkeit des Hohlspiegels 8 mittels Mikrometerschraube in Richtung des Interferometerarms 5, dient dem Abgleich des Abbildungsmaßstabs gegenüber dem anderen Interferometerarm 4. Zur Ermittlung eines Phasenportraits des Specklemusters aus mehreren Einzelaufnahmen (mindestens drei) wird die Speckleabbildung durch Verschieben des Hohlspiegels 8 in Längsrichtung zum Interferometerarm 5 um Bruchteile einer Lichtwellenlänge beeinflußt. Dieses Verschieben erfolgt vorzugsweise mit einem Piezotranslator 12.

Es ist möglich die Hohlspiegel 6 und/oder 8 der Vorrichtung durch eine Kombination von einem Plan- oder Konvexspiegel mit einer Sammellinsenanordnung zu ersetzen.

## Patentansprüche

1. Vorrichtung zur Beobachtung von Prüflingsoberflächen für die Verformungsmessung nach dem Speckle-Shearing-Verfahren in kompakter Bauart, umfassend eine kohärente Beleuchtung der Prüflingsoberfläche, einen Bildsensor (7) und ein zur Abbildung der Prüflingsoberfläche auf den Bildsensor verwendetes, zwei Spiegel (6, 8) und einen Strahlteiler (3) aufweisendes Zweistrahl-Interferometer, bei dem Justiervorrichtungen (13, 14) zum Längs- und Querverstellen mindestens eines der Spiegel (6, 8) vorhanden sind, dadurch **gekennzeichnet**, daß das Zweistrahl-Interferometer als Michelson-Interferometer ausgebildet ist und in der Michelson-Interferometeranordnung als Endspiegel und Abbildungsoptik zur Abbildung der Prüflingsoberfläche auf den Bildsensor Hohlspiegel (6, 8) vorzugsweise gleicher Brennweite ausgebildet sind.

2. Vorrichtung nach Anspruch 1, **dadurch gekennzeichnet**, daß der Strahlteiler (3) ein Strahlteilerwürfel ist, der das von der Prüflingsoberfläche (1) einfallende Licht in einen ersten sich quer zur Einfallsrichtung erstreckenden Interferometerarm (4) und einen zweiten sich in Einfallsrichtung erstreckenden Interferometerarm (5) aufteilt.

3. Vorrichtung nach Anspruch 1, **dadurch gekennzeichnet**, daß ein Piezotranslator (12) in Verbindung mit einem der beiden Hohlspiegel (6 oder 8) vorhanden ist, um diesen längs der Hauptachse seines Interferometerarms kontrolliert zu bewegen.

4. Vorrichtung nach Anspruch 1, **dadurch gekennzeichnet**, daß als Justiervorrichtungen Justierschrauben (13) vorgesehen sind, um die Hohlspiegel (6 oder 8) durch Querverschieben oder Kippen zur Achse des jeweiligen Interferometerarms (4 oder 5) zu justieren.

5. Vorrichtung nach Anspruch 1, **dadurch gekennzeichnet**, daß als Justiervorrichtungen Justierschrauben (14) vorgesehen sind, um die Hohlspiegel (6 oder 8) längs des jeweiligen Interferometerarms (4 oder 5) zu justieren.

6. Vorrichtung nach Anspruch 1, **dadurch gekennzeichnet**, daß die die Brennweite der Hohlspiegel (6, 8) so gewählt wird, daß sie direkt hinter dem Strahlteiler (3) anordenbar sind.

7. Vorrichtung nach Anspruch 1, **dadurch gekennzeichnet**, daß das optische Abbildungssystem der Hohlspiegel (6, 8) durch ein Objektiv (2), das zwischen der Oberfläche (1) und dem Strahlteiler (3) angeordnet ist, ergänzt wird.

8. Vorrichtung nach Anspruch 1, dadurch **gekennzeichnet**, daß anstelle eines oder beider Hohlspiegel (6, 8) eine Kombination von einem Plan- oder Konvexspiegel mit einer Sammellinsenanordnung vorgesehen ist.

## Claims

1. Device for the purpose of monitoring the surfaces of test samples for measuring deformation according to the Speckle-Shearing-method in a compact construction, comprising a coherent illumination of the surface of the test sample, an image sensor (7) and a two-beam interferometer which is used for the purpose of imaging the surface of the test sample on to the image sensor, and comprises two mirrors (6, 8) and a beam splitter (3) and wherein adjusting devices (13, 14) are provided for the purpose of adjusting at least one of the mirrors (6, 8) in a longitudinal and transverse manner, characterised in that the two-beam interferometer is formed as a Michelson-interferometer and in the Michelson-interferometer arrangement concave mirrors (6, 8) of preferably the same focal length are formed as an end mirror and as imaging optics for the purpose of imaging the surface of the test sample on to the image sensor.

2. Device according to claim 1, characterised in that the beam splitter (3) is a beam splitter cube which splits the light which is incident from the surface of the test sample (1) into a first interferometer arm (4) which extends in a transverse manner with respect to the direction of incidence and into a second interferometer arm (5) which extends in the direction of incidence.

3. Device according to claim 1, characterised in that a piezo-translator (12) is provided in conjunction with one of the two concave mirrors (6 or 8) in order to move said concave mirror in a controlled manner along the main axis of its interferometer arm.

4. Device according to claim 1, characterised in that adjusting screws (13) are provided as adjusting devices in order to adjust the concave mirrors (6 or 8) by displacing in a transverse manner or tilting with respect to the axis of the respective interferometer arm (4 or 5).

5. Device according to claim 1, characterised in that adjusting screws (14) are provided as adjusting devices in order to adjust the concave mirrors (6 or 8) along the respective interferometer arm (4 or 5).

6. Device according to claim 1, characterised in that the focal length of the concave mirrors (6, 8) is selected in such a manner that they can be arranged directly behind the beam splitter (3).

7. Device according to claim 1, characterised in that the optical imaging system of the concave mirrors (6, 8) is supplemented by an objective (2) which is disposed between the surface (1) and the beam splitter (3).

8. Device according to claim 1, characterised in that a combination of a plane or convex mirror comprising a convergent lens arrangement is provided instead of one or both concave mirrors (6, 8).

## Revendications

1. Dispositif compact pour l'observation de la surface d'échantillons pour la mesure de déformations selon la méthode de Speckle-Shearing, comprenant une source de lumière cohérente pour l'éclairage de la surface de l'échantillon, un détecteur d'image (7) et un interféromètre à deux faisceaux, comportant deux miroirs (6, 8) et un séparateur de faisceaux (3), pour la reproduction de la surface de l'échantillon sur le détecteur d'image, dans lequel des dispositifs de réglage (13, 14) sont prévus pour régler au moins l'un des miroirs (6, 8) dans les directions longitudinale et transversale, caractérisé par le fait que l'interféromètre à deux faisceaux est agencé sous forme d'interféromètre de Michelson et que dans le système d'interféromètre de Michelson, les miroirs finaux et l'optique de reproduction pour la reproduction de la surface de l'échantillon sur le détecteur d'image sont agencés sous forme de miroirs concaves (6,8) de préférence de même focale.

2. Dispositif selon la revendication 1, caractérisé par le fait que le séparateur de faisceaux (3) est un cube séparateur qui sépare la lumière venant de la surface de l'échantillon (1) et la dirige dans un premier bras (4) d'interféromètre qui s'étend transversalement à la direction d'incidence et dans un second bras (5) d'interféromètre qui s'étend dans la direction d'incidence.

3. Dispositif selon la revendication 1, caractérisé par le fait qu'il est prévu un translateur piézo-électrique (12) en combinaison avec l'un des deux miroirs concaves (6 ou 8), aux fins de déplacer celui-ci de manière contrôlée le long de l'axe principal de son bras d'interféromètre.

4. Dispositif selon la revendication 1, caractérisé par le fait que des vis de réglage (13) sont prévues comme dispositifs de réglage, aux fins de régler les miroirs concaves (6 ou 8) par déplacement transversal ou par pivotement par rapport à l'axe du bras (4 ou 5) d'interféromètre concerné.

5. Dispositif selon la revendication 1, caractérisé par le fait que des vis de réglage (14) sont prévues comme dispositifs de réglage aux fins de régler les miroirs concaves (6 ou 8) le long du bras (4 ou 5) d'interféromètre concerné.

6. Dispositif selon la revendication 1, caractérisé par le fait que la focale des miroirs concaves (6 ou 8) est choisie de telle sorte que ceux-ci puissent être disposés directement derrière le séparateur de faisceaux (3).

7. Dispositif selon la revendication 1, caractérisé par le fait que le système optique de reproduction des miroirs concaves (6, 8) est complété par un objectif (2) qui est disposé entre la surface (1) et le séparateurs de faisceaux (3).

8. Dispositif selon la revendication 1, caractérisé par le fait qu'il est prévu, à la place de l'un des miroirs ou des deux miroirs concaves (6, 8), une combinaison d'un miroir plan ou d'un miroir convexe et d'un système de lentille collimatrice.
